(19) Europäisches Patentamt
European Patent Office
Office européen des brevets

(11) **EP 1 759 178 B1**

(12) **EUROPÄISCHE PATENTSCHRIFT**

(45) Veröffentlichungstag und Bekanntmachung des Hinweises auf die Patenterteilung:
**09.08.2017 Patentblatt 2017/32**

(21) Anmeldenummer: **05754571.7**

(22) Anmeldetag: **17.06.2005**

(51) Int Cl.:
***G01F 1/84*** *(2006.01)*

(86) Internationale Anmeldenummer:
**PCT/EP2005/052817**

(87) Internationale Veröffentlichungsnummer:
**WO 2006/000540 (05.01.2006 Gazette 2006/01)**

(54) **MESSWANDLER VOM VIBRATIONSTYP**

VIBRATION-TYPE TRANSDUCER

TRANSDUCTEUR DU TYPE TRANSDUCTEUR DE VIBRATIONS

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **23.06.2004 DE 102004030392**

(43) Veröffentlichungstag der Anmeldung:
**07.03.2007 Patentblatt 2007/10**

(73) Patentinhaber: **Endress+Hauser Flowtec AG**
**4153 Reinach (CH)**

(72) Erfinder:
• **DRAHM, Wolfgang**
**85435 Erding (DE)**

• **RIEDER, Alfred**
**84032 Landshut (DE)**

(74) Vertreter: **Andres, Angelika Maria**
**Endress+Hauser (Deutschland) AG+Co. KG PatServe**
**Colmarer Strasse 6**
**79576 Weil am Rhein (DE)**

(56) Entgegenhaltungen:
**EP-A- 1 110 059     WO-A-00/14485**
**US-A- 5 979 246**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen, insb. für eine Verwendung in einem Coriolis-Massedurchflußmesser geeigneten, Meßwandler vom Vibrationstyp.

Zur Ermittlung eines Massedurchflusses eines in einer Rohrleitung strömenden Fluids, insb. einer Flüssigkeit, werden oftmals solche Meßgeräte verwendet, die mittels eines Meßwandlers vom Vibrationstyp und einer daran angeschlossener Steuer- und Auswerteelektronik, im Fluid Corioliskräfte bewirken und von diesen abgeleitet ein den Massedurchfluß repräsentierendes Meßsignal erzeugen.

Solche Coriolis-Massedurchflußmesser sind seit langem bekannt und im industriellen Einsatz etabliert. So sind z.B. in der DE-A 39 16 285, der
EP-A 317 340, der EP-A 518 124, der EP-A 1 207 375, der US-A 48 23 614, der US-A 52 91 792, der US-A 53 98 554, der US-A 54 76 013, der
US-A 55 31 126, der US-A 56 91 485, US-A 57 05 754, der US-A 57 96 012, der US-A 59 45 609, der US-A 59 79 246, US-A 60 06 609, der
US-B 62 23 605, der US-B 64 84 591, der US-B 68 40 109, der
WO-A 99 51 946, WO-A 99 40 394 oder der WO-A 00 14 485 Coriolis-Massedurchflußmesser mit jeweils einem Meßwandler vom Vibrationstyp beschrieben, welcher Meßwandler auf einen Massedurchfluß eines in einer Rohrleitung strömenden Fluids reagiert und welcher Meßwandler umfaßt:

- ein einziges gebogenes oder gerades, im Betrieb vibrierendes Meßrohr zum Führen des Fluids, welches Meßrohr über ein einlaßseitig einmündendes Einlaßrohrstück und über ein auslaßseitig einmündendes Auslaßrohrstück mit der Rohrleitung kommuniziert,
- ein einlassseitig und auslassseitig am Messrohr fixiertes Trägerelement sowie
- eine Erregeranordnung, die das Meßrohr im Betrieb überwiegend zu Biegeschwingungen in einer Rohrebene anregt, sowie
- eine Sensoranordnung zum punktuellen Erfassen einlaßseitiger und auslaßseitiger Schwingungen des Meßrohrs.

Vibrierende Meßrohre von solchen Messaufnehmern bewirken bekanntlich - angeregt zu lateralen Biegeschwingungen um eine das Einlassende und das Auslassende verbindende gedachte Schwingungsachse - im hindurchströmenden Fluid Corioliskräfte. Diese wiederum führen dazu,
daß den angeregten Biegeschwingungen im sogenannten Nutzmode koplanare Biegeschwingungen gemäß einer zweiten Eigenschwingungsform von höherer und/oder niederer Ordnung, dem so genannten Coriolismode, überlagert werden und dementsprechend die mittels der Sensoranordnung einlaßseitig und auslaßseitig erfaßten Schwingungen eine auch vom Massedurchfluß abhängige, meßbare Phasendifferenz aufweisen.

Üblicherweise werden die Meßrohre derartiger, z.B. in Coriolis-Massedurchflußmessern eingesetzten, Meßwandler im Betrieb auf einer momentanen Resonanzfrequenz einer natürlichen Eigenschwingungsform, insb. bei konstantgeregelter Schwingungsamplitude, angeregt. Da diese Resonanzfrequenz insb. auch von der momentanen Dichte des Fluids abhängig ist, kann mittels marktüblicher Coriolis-Massedurchflußmesser neben dem Massedurchfluß auch die Dichte von strömenden Fluiden gemessen werden.

Ein wesentlicher Nachteil vorbeschriebener Meßwandler besteht darin, daß aufgrund wechselseitiger lateraler Auslenkungen des überwiegend im Nutzmode vibrierenden einzigen Meßrohrs gleichfrequent oszillierende Querkräfte auf die Rohrleitung wirken können und daß diese Querkräfte nur mit einem sehr hohen technischen Aufwand von der Dichte des zu messenden Mediums unabhängig kompensiert werden können.

Zur Verbesserung der dynamischen Balance des Meßwandlers, insb. zur Reduzierung solcher durch das vibrierende einzige Meßrohr erzeugten, einlaßseitig und auslaßseitig auf die Rohrleitung einwirkenden Querkräften, umfassen die in der EP-A 317 340, der US-A 53 98 554, der US-A 55 31 126, der US-A 56 91 485, der US-A 57 96 012, US-A 59 79 246 oder der

WO-A 00 14 485 gezeigten Meßwandler jeweils wenigstens einen einstückigen oder mehrteilig ausgeführten Gegenschwinger, der jeweils einlaßseitig und auslaßseitig am Meßrohr fixiert ist. Derartige balkenförmig, insb. rohrförmig, oder als mit dem Meßrohr fluchtendes Körperpendel realisierte Gegenschwinger schwingen im Betrieb zum jeweiligen Meßrohr außer Phase, insb. gegenphasig, wodurch die Wirkung der durch Meßrohr und Gegenschwinger jeweils hervorgerufenen seitlichen Querkräfte auf die Rohrleitung minimiert und ggf. auch völlig unterdrückt werden können.

Derartige Meßwandler mit Gegenschwinger haben sich insb. bei solchen Anwendungen bewährt, bei denen das zu messende Fluid eine im wesentlich konstante oder nur in einem sehr geringen Maße veränderliche Dichte aufweist, also bei solchen Anwendungen, bei denen eine auf die angeschlossene Rohrleitung wirkende Resultierende aus den vom Meßrohr erzeugten Querkräften und vom Gegenschwinger erzeugten Gegenkräften vorab ohne weiteres auf Null fest eingestellt werden kann.

Demgegenüber weist ein derartiger Meßwandler, insb. gemäß der US-A 59 69 265, bei Anwendung für Fluide mit in einem weiten Bereich schwankender Dichte, z.B. verschiedenen, aufeinanderfolgend zu messenden Fluiden, wenn auch in geringerem Maße, praktisch den gleichen Nachteil wie ein Meßwandler ohne Gegenschwinger auf, da vorgenannte Resultierende der Querkräfte auch von der Dichte des Fluids abhängig sind und somit in erheblichem Maße von Null verschieden sein können. Anders gesagt, auch ein aus Meßrohr und Gegenschwinger bestehendes Gesamtsystem wird im Betrieb aufgrund von dichteabhängigen Unbalancen und damit einhergehenden Querkräften aus einer zugewiesenen statischen Ruhelage global ausgelenkt.

Weitere Möglichkeiten auch zur dichteunabhängigen Reduzierung solcher Querkräfte sind z.B. in der US-A 55 31 126, in der WO-A 99 40 394 oder in der WO-A 00 14 485 vorgeschlagen.

Im besonderen ist in der WO-A 00 14 485 ein Meßwandler vom Vibrationstyp für ein in einer Rohrleitung strömendes Fluid beschrieben, welcher Meßwandler umfaßt:

- ein in den Verlauf der Rohrleitung eingesetztes, im Betrieb zumindest zeitweise vibrierendes Meßrohr zum Führen des Fluids,
- ein an einem Einlassende und an einem Auslassende des Messrohrs fixiertes erstes, insb. gleichfalls vibrierendes, Trägerelement,
- eine elektro-mechanische Erregeranordnung zum Erzeugen einer das Meßrohr virbrienlassenden zeitlich veränderlichen Erregerkraft,
- eine Sensoranordnung zum Erfassen von Schwingungen des Meßrohrs, sowie
- eine mit Messrohr und Trägerelement verbundene Koppleranordnung mit zwei mit dem vibrierenden Messrohr und dem Trägerelement elektro-mechanisch wechselwirkenden Koppelelementen zum Erzeugen von Ausgleichs-Schwingungen,
- wobei das Messrohr im Betrieb mittels der Erregeranordnung zumindest zeitweise zu einem Schwingungsmode angeregt ist,

  -- in dem es solche Biege-Schwingungen um eine das Einlassende und das Auslassende des Messrohrs imaginär verbindende Schwingungsachse ausführt, dass es überwiegend eine Schwingungsform mit einem einzigen Biege-Schwingungsbauch einnimmt, und
  -- in dem es infolge von dabei erzeugten Querkräften zumindest zeitweise aus einer zugewiesenen statischen Ruhelage lateral verschoben ist, und

- wobei die Ausgleichs-Schwingungen der Koppelelemente so ausgebildet und am Messrohr angeordnet sind, daß die erzeugten Querkräfte kompensiert werden und somit ein Massenmittelpunkt eines aus Meßrohr, Erregeranordnung, Sensoranordnung und den beiden Auslegern gebildeten Schwingungssystems ortsfest gehalten wird.

Ferner ist in der WO-A 99 40 394 ein Meßwandler vom Vibrationstyp für ein in einer Rohrleitung strömendes Fluid beschrieben, welcher Meßwandler umfaßt:

- ein in den Verlauf der Rohrleitung eingesetztes, im Betrieb zumindest zeitweise vibrierendes Meßrohr zum Führen des Fluids,

  -- wobei das Meßrohr über ein in das Einlassende einmündendes erstes Verbindungsrohrstück und über ein in das Auslassende einmündendes, mit dem ersten Verbindungsrohrstück und mit der Schwingungsachse fluchtendes zweites Verbindungsrohrstück mit der Rohrleitung kommuniziert,

- ein an einem Einlassende und an einem Auslassende des Messrohrs fixiertes, als gleichfalls vibrierender Gegenschwinger ausgebildetes erstes Trägerelement,
- ein als Wandler-Gehäuse ausgebildetes zweites Trägerelement,
- eine elektro-mechanische Erregeranordnung zum Erzeugen einer das Meßrohr virbrienlassenden zeitlich veränderlichen Erregerkraft,
- eine Sensoranordnung zum Erfassen von Schwingungen des Meßrohrs, sowie
- eine mit Messrohr, den beiden Trägerelementen sowie den Verbindungsrohrstücken verbundene Koppleranordnung mit zwei jeweils am vibrierenden Messrohr, den beiden Trägerelement sowie den Verbindungsrohrstücken fixierten Koppelelementen zum Übertragen von Ausgleichs-Kräften in das Wandlergehäuse,
- wobei das Messrohr im Betrieb mittels der Erregeranordnung zumindest zeitweise zu einem Schwingungsmode angeregt ist,

  -- in dem es solche Biege-Schwingungen um eine das Einlassende und das Auslassende des Messrohrs imaginär verbindende Schwingungsachse ausführt, dass es überwiegend eine Schwingungsform mit einem einzigen Biege-Schwingungsbauch einnimmt,

- wobei die beiden Koppelelemente der Koppleranordnung derart mit dem Messrohr und den Trägerelement mechanisch gekoppelt sind, daß jedes der beiden jeweils in einem Bereich eines gemeinsamen Schwingungsknoten von Messrohr und Gegenschwinger zur Wirkung gelangt, und
- wobei eine durch die Koppelelemente bestimmte, zwischen Messrohr und Wandlergehäuse wirksame, konstante Federsteifigkeit der Koppleranordnung so hoch gewählt ist, daß die Koppleranordnung in einer Wirkrichtung der Querkräfte im wesentlichen als starrer Körper wirkt.

Darüber hinaus ist in der US-A 55 31 126 ein Meßwandler vom Vibrationstyp für ein in einer Rohrleitung strömendes Fluid gezeigt, welcher Meßwandler umfaßt:

- ein in den Verlauf der Rohrleitung eingesetztes, im Betrieb zumindest zeitweise vibrierendes Meßrohr zum Führen des Fluids,
- ein an einem Einlassende und an einem Auslassende des Messrohrs fixiertes erstes, insb. gleichfalls vibrierendes, Trägerelement,
- eine elektro-mechanische Erregeranordnung zum Erzeugen einer das Meßrohr virbrienlassenden zeitlich veränderlichen Erregerkraft,
- eine Sensoranordnung zum Erfassen von Schwingungen des Meßrohrs, sowie
- eine mit Messrohr und Trägerelement verbundene Koppleranordnung mit einem mit dem vibrierenden Messrohr und dem Trägerelement elektro-mechanisch wechselwirkenden Koppelelement,
- wobei das Messrohr im Betrieb mittels der Erregeranordnung zumindest zeitweise zu einem Schwingungsmode angeregt ist,

 -- in dem es solche Biege-Schwingungen um eine das Einlassende und das Auslassende des Messrohrs imaginär verbindende Schwingungsachse ausführt, dass es überwiegend eine Schwingungsform mit einem einzigen Biege-Schwingungsbauch einnimmt,

- wobei das eine Koppelelement derart mit dem Messrohr und dem Trägerelement mechanisch gekoppelt ist, daß es in einem zentralen Bereich des einzigen Schwingungsbauchs auf das Messrohr einwirkt, und
- wobei eine durch die Koppelelemente bestimmte, zwischen Messrohr und Trägerelement wirksame, einstellbare Federsteifigkeit der Koppleranordnung negativ ausgebildet ist.

Bei vorgenannten Messwandlern wird das Problem von dichteabhängigen Unbalancen im Prinzip dadurch gelöst, daß ein Amplitudengang der Koppelemente oder des Gegenschwingers mittels veränderlicher, von der momentanen Schwingungsamplitude abhängiger Federsteifigkeiten im Betrieb derart an die Meßrohrschwingungen angepaßt wird, daß die vom vibrierenden Meßrohr und Gegenschwinger erzeugten Querkräfte einander teilweise kompensieren. Als Nachteil der vorgeschlagenen Messwandler ist hierbei aber anzusehen, daß trotz technisch jeweils sehr aufwendiger Konstruktionen des Kompensationsmechanismus eine vollständige Neutralisierung der vom Messrohr erzeugten Querkräfte weder praktisch noch theoretisch möglich ist.

Ein andere Möglichkeit zur Reduzierung von dichteabhängigen Querkräften ist z.B. in der US-A 52 87 754, der US-A 57 05 754 oder der US-A 57 96 010 beschrieben. Bei dort gezeigten Meßwandlern werden die seitens des vibrierenden einzigen Meßrohrs erzeugten, eher mittel- oder hochfrequent oszillierenden Querkräfte mittels eines im Vergleich zum Meßrohr sehr schweren Gegenschwingers und ggf. einer relativ weichen Ankopplung des Meßrohrs an die Rohrleitung, also praktisch mittels eines mechanischen Tiefpasses, von der Rohrleitung, fern gehalten. Ein großer Nachteil eines solchen Meßwandlers besteht u.a. aber darin, daß die zur Erzielung einer ausreichend robusten Dämpfung erforderliche Masse des Gegenschwingers überproportional mit Nennweite des Meßrohrs steigt. Eine Verwendung solch massiger Bauteile bedeutet einerseits stets einen erhöhten Montageaufwand sowohl bei der Fertigung als auch beim Einbau des Meßgeräts in die Rohrleitung. Andererseits ist hierbei stets sicherzustellen, daß eine mit zunehmender Masse immer niedriger werdende minimale Eigenfrequenz des Meßwandlers nach wie vor weitab von den ebenfalls sehr niedrigen Eigenfrequenzen der angeschlossenen Rohrleitung liegt. Somit ist eine Verwendung eines derartigen Meßwandlers in industriell, insb. für Messungen von Flüssigkeiten, einsetzbaren Coriolis-Massedurchflußmessern oder auch Coriolis-Massedurchfluß/Dichtemessern eher auf relativ geringe Nennweiten von kleiner gleich 10 mm begrenzt.

Darüber hinaus können ferner weitere Störungen von Meßwandlern der beschriebenen Art dadurch auftreten, daß, wie beispielsweise auch in der US-A 52 91 792 diskutiert, zusätzlich zu den Schwingungen im Nutz- und Coriolismodes auch laterale Biege-Schwingungsmoden angeregt werden können, deren Schwingungsrichtung außerhalb der gemeinsamen Schwingungsrichtung des Nutz- und Coriolismodes, insb. senkrecht dazu, liegen.

Eine Aufgabe der Erfindung besteht daher darin, einen, insb. für einen Coriolis-Massedurchflußmesser oder auch für einen Coriolis-Massedurchfluß/ Dichtemesser geeigneten, Meßwandler vom Vibrationstyp anzugeben, der, auch bei einer Verwendung nur eines einzigen, im Betrieb vom Messrohr durchströmten Meßrohrs, über einen weiten Fluiddichtebereich dynamisch gut ausbalanciert ist und der, insb. auch bei Verwendung Messrohre mit einer Nennweite von größer als 10 mm, trotzdem von vergleichsweise geringer Masse ist.

Zur Lösung der Aufgabe besteht die Erfindung in einem Meßwandler vom Vibrationstyp gemäß Anspruch 1 bzw. Anspruch 2.

Nach einer ersten Ausgestaltung der Erfindung ist das wenigstens eine Koppelelement aufgrund von Relativbewegungen des schwingenden Messrohrs und des Trägerelements wiederholt elastischen Verformungen unterworfen.

Nach einer zweiten Ausgestaltung der Erfindung verbindet das wenigstens eine Koppelelement Meßrohr und Trägerelement federelastisch miteinander.

Nach einer dritten Ausgestaltung der Erfindung ist das Messrohr, insb. dessen Schwingungsform im angeregten Schwingungsmodes, im wesentlichen symmetrisch, insb. rotationssymmetrisch, bezüglich einer in Wirkrichtung der Erregerkraft liegenden imaginären Bezugsachse ausgebildet.

Nach einer vierten Ausgestaltung der Erfindung weist das erste Trägerelement eine gleichfalls in Wirkrichtung der Querkraft wirksame Federsteifigkeit auf, die von der Federsteifigkeit des Messrohrs verschieden ist, insb. ist die Federsteifigkeit des Messrohrs niedriger gewählt als die Federsteifigkeit des ersten Trägerelements.

Nach einer fünften Ausgestaltung der Erfindung ist das erste Trägerelement so ausgebildet, daß seine Masse größer gehalten ist als eine Gesamtmasse von Messrohr mit darin enthaltenem Fluid.

Nach einer sechsten Ausgestaltung der Erfindung entspricht der angeregte Schwingungsmode im wesentlichen einem natürlichen Eigenmode des Messrohrs mit der darauf einwirkenden Koppleranordnung.

Nach einer siebenten Ausgestaltung der Erfindung nimmt das vibrierende Messrohr überwiegend eine Schwingungsform mit genau drei Biege-Schwingungsbäuchen ein.

Nach einer achten Ausgestaltung der Erfindung ist eine Schwingungsfrequenz der Biege-Schwingungen des Messrohrs im Betrieb stets niedriger gehalten, als eine niedrigste mechanische Resonanzfrequenz des Trägerelements.

Nach einer neunten Ausgestaltung der Erfindung erstreckt sich das erste Trägerelement zumindest abschnittsweise entlang des Messrohrs.

Nach einer zehnten Ausgestaltung der Erfindung ist das Meßrohr zumindest teilweise vom, insb. im wesentlichen rohrförmig ausgebildeten, ersten Trägerelement umhüllt.

Nach einer elften Ausgestaltung der Erfindung sind das Meßrohr und das erste Trägerelement zueinander im wesentlichen koaxial ausgerichtet.

Nach einer zwölften Ausgestaltung der Erfindung kommuniziert das Meßrohr über ein in das Einlassende einmündendes erstes Verbindungsrohrstück und über ein in das Auslassende einmündendes, insb. mit dem ersten Verbindungsrohrstück und/oder mit der Schwingungsachse fluchtendes, zweites Verbindungsrohrstück mit der Rohrleitung.

Nach einer dreizehnten Ausgestaltung der Erfindung ist das erste Trägerelement als einen einlaßseitig und auslaßseitig am Meßrohr fixierter Gegenschwinger ausgebildet und sind das Meßrohr und das erste Trägerelement über das erste und das zweite Verbindungsrohrstück schwingfähig in einem, insb. als Aufnehmer-Gehäuse ausgebildeten, zweiten Trägerelement aufgehängt.

Ein Grundgedanke der Erfindung ist es, einerseits das Messrohr betriebsgemäß in einem Nutzmode vibrieren zu lassen, in dem es eine Schwingungsform einnimmt, die eine ungeradzahlige Anzahl von Schwingungsbäuchen, beispielsweise also drei, fünf oder sieben Schwingungsbäuche u.s.w., aufweist und insoweit im wesentlichen symmetrisch ausgebildet ist. Anderseits zielt die Erfindung darauf ab, mittels in das dergestalt vibrierende Messrohr eingeleiteter Federkräfte die Schwingungsform des im Nutzmode vibrierenden Messrohrs derart zu deformieren, daß nicht nur sämtliche in Richtung der Erregerkraft wirkenden Federkräfte sondern auch möglichst alle resultierend in derselben Richtung wirkenden, vor allem die durch das vibrierende Messrohr hervorgerufenen, Beschleunigungskräfte im Messwandler auch bei schwankender Fluiddichte jeweils weitgehend ausgeglichen, also einander jeweils kompensierend ausgebildet sind. Ein Vorteil der Erfindung besteht dabei darin, daß der Meßwandler zum einen trotz allfälliger, betriebsbedingter Schwankungen der inneren Massenverteilung, z.B. infolge schwankender Fluiddichte, sehr gut ausbalanciert ist, und zwar lediglich aufgrund seiner mittels der Koppleranordnung erzwungenen geometrischen Ausprägung der Biege-Schwingungsform. Der erfindungsgemäße Meßwandler zeichnet sich des weiteren dadurch aus, daß er zum einen sehr kompakt und zum anderen sehr leicht ausgeführt werden kann. Darüber hinaus kann der erfindungsgemäße Messaufnehmer, insb. aber auch dessen Koppleranordnung mit einem im Vergleich zu herkömmlichen Messaufnehmern der beschriebenen Art nur sehr geringfügigen Mehraufwand gefertigt werden.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.

Fig. 1 zeigt ein in eine Rohrleitung einfügbares Meßgerät zum Messen wenigstens einer physikalischen Meßgröße eines in der Rohrleitung geführten Fluids,

Fig. 2a zeigt ein Ausführungsbeispiel für einen für das Meßgerät von Fig. 1 geeigneten Meßwandler vom Vibrations-Typ mit einem geraden Messrohr in einer perspektivischen Seitenansicht,

Fig. 2b zeigt einen vergrößerten Ausschnitt des Messwandlers von Fig. 2a

Fig. 3 zeigt den Meßwandler von Fig. 2a geschnitten in einer Seitenansicht,

Fig. 4a zeigt den Meßwandler von Fig. 2a in einem ersten Querschnitt,

Fig. 4b zeigt den Meßwandler von Fig. 2a in einem zweiten Querschnitt,

Fig. 5 zeigt den Meßwandler von Fig. 2a in einem dritten Querschnitt,

Fig. 6 zeigt Biege-Schwingungsformen für vibrierende Messrohre,

Fig. 7 zeigt den Verlauf von Querkräften, die durch in den Schwingungsformen gemäß Fig. 6 vibrierende Messrohre im Messaufnehmer erzeugt werden, und

Fign. 8 - 10 zeigen weitere Ausführungsbeispiele für einen Meßwandler vom Vibrations-Typ geschnitten in einer Seitenansicht.

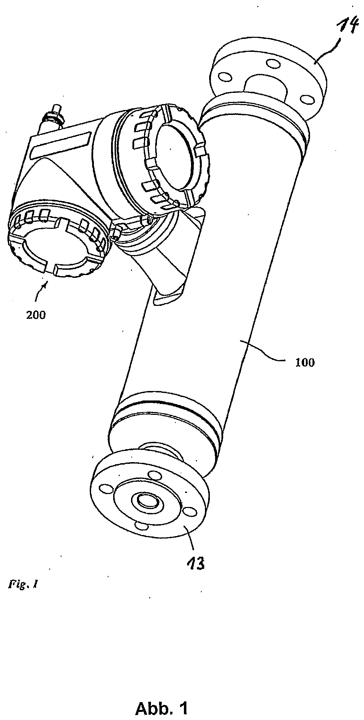

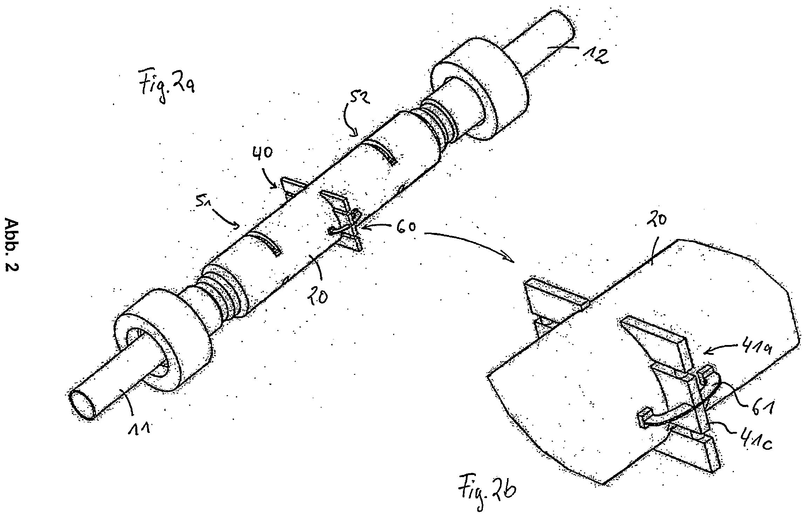

In der Fig. 1 ist ein in eine - hier nicht gezeigte - Rohrleitung einfügbares Meßgerät zum Messen wenigstens einer physikalischen Meßgröße - beispielsweise einen Massedurchfluß, m, eine Dichte, ρ , und/oder eine Viskosität, η - eines in der Rohrleitung geführten, insb. strömenden, Fluids dargestellt. Das Meßgerät umfaßt dafür einen Meßwandler vom Vibrationstyp der im Betrieb vom zu messenden Fluid durchströmt ist. Der Meßwandler dient dazu, in einem hindurchströmenden Fluid mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so in der dem Fachmann bekannten Weise z.B. der Massedurchfluß, m, die Dichte, ρ, und/oder die Viskosität, η, des Fluids gemessen werden. In den Fig. 2 bis 6 sind entsprechende Ausführungsbeispiele und Ausgestaltungen für solche Meßwandler vom Vibrationstyp schematisch dargestellt.

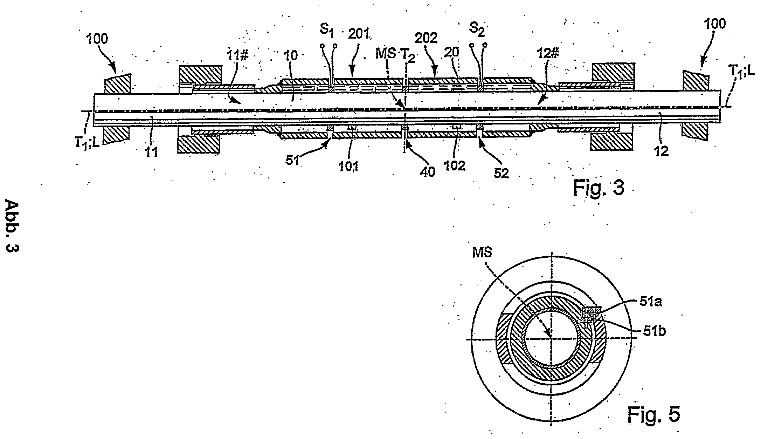

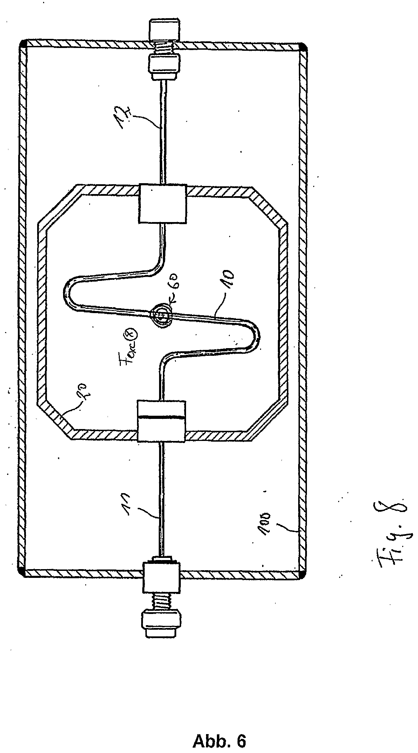

Zum Führen des Fluids umfaßt Meßwandler ein einziges Meßrohr 10 von vorgebbarem Meßrohrdurchmesser, das im Betrieb zumindest zeitweise vibrieren gelassen und somit wiederholt, insb. zyklisch, elastisch verformt wird. Wie in Fig. 2 dargestellt, ist das im wesentlichen glatt-wandige, kreiszylindrische Meßrohr 10 dafür in einem einlaßseitig und auslaßseitig an diesem in geeigneter Weise fixierten ersten Trägerelement 20 schwingfähig gehaltert. Im hier gezeigten Ausführungsbeispiel ist das erste Trägerelement rohrförmig, insb. koaxial zum Meßrohr 10 ausgerichtet, ausgeführt; das Trägerelement 20 kann dabei beispielsweise auch als ein das Meßrohr 10 sowie weitere Komponenten des Meßwandlers umhüllendes Wandlergehäuse ausgebildet sein. Als Trägerelement 20 kann anstelle von einem Tragrohr z.B. auch ein im wesentlichen kastenförmiger Tragrahmen ein dienen. Falls erforderlich, kann das sich im wesentlichen entlang des Meßrohrs 10 erstreckende Trägerelement 20 aber auch, wie z.B. auch in der EP-A 518 124, der US-A 57 05 754 oder der US-A 62 23 605 gezeigt, als massive Trägerplatte oder aber auch als kastenförmiger Trägerrahmen ausgebildet sein. Weitere bevorzugte Ausgestaltungen des Trägerelements 20 wie auch weitere Funktionen davon werden weiter unten noch näher erläutert. Anstelle des in Fig. 2a oder 3 als im wesentlichen gerade gezeigten Messrohrs 10 können im übrigen aber auch, insb. in einer einzigen Ebene, insb. S-förmig, gekrümmte Rohre, wie sie in den Fig. 8 - 10 oder z.B. auch in der DE-A 39 16 285 oder EP-A 518 124 gezeigt sind, als Messrohr 10 verwendet werden. Ein Vorteil gerader Meßrohre besteht z.B. darin, daß sie praktisch in jeder beliebigen Einbaulage, insb. auch nach einer in-line durchgeführten Reinigung, mit hoher Sicherheit rückstandslos entleert werden können. Ferner sind solche Meßrohre im Vergleich z.B. zu einem omegaförmig oder helixförmig gebogenem Meßrohr wesentlich einfacher und dementsprechend kostengünstiger herzustellen. Demgegenüber weisen solche Messaufnehmer mit geradem Messrohr üblicherweise eine vergleich zu Messaufnehmern mit gebogenem Messrohr erhöhte Empfindlichkeit gegenüber Temperaturschwankungen und damit einhergehenden axialen Längenänderungen auf.

Zum Hindurchströmenlassen des Fluids ist das Meßrohr 10, wie in den Fig. 2a, 3 oder 8 bis 10 gezeigt, über ein einlaßseitig einmündendes erstes Verbindungsrohrstück 11 und über ein auslaßseitig einmündendes zweites Verbindungsrohrstück 12 an eine das Fluid zu- bzw. abführende, hier nicht dargestellte, Rohrleitung angeschlossen. Meßrohr 10, Einlaß- und Auslaßrohrstück 11, 12 sind, zueinander und zu einer gedachten Längsachse L fluchtend ausgerichtet, in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandler üblichen Materialien, wie z.B. Stahl, Titan-, Zirkonium- oder Tantal-Legierungen etc., verwendet werden. Für den Fall, daß der Meßwandler lösbaren mit der Rohrleitung zu montieren ist, ist jedem der beiden Verbindungsrohrstücke 11, 12 ferner jeweils ein Flansch 13 bzw. 14 angeformt; falls erforderlich können die Verbindungsrohrstücke 11, 12 aber auch direkt mit der Rohrleitung, z.B. mittels Schweißen oder Hartlötung, verbunden werden.

Zusätzlich zum ersten Trägerelement 20 kann, wie auch aus der Zusammenschau von Fig. 1, Fig. 2a und Fig. 3 oder auch aus den Fig. 8 bis 10 ersichtlich, an den Verbindungsrohrstücken 11, 12, ein zweites Trägerelement 100 fixiert sein, das dann beispielsweise auch statt des ersten Trägerelements 20 als das Meßrohr 10 aufnehmendes Wandlergehäuse ausgestaltet sein kann, vgl. Fig. 1.

Im Betrieb des Meßwandlers wird das Meßrohr 10 zumindest zeitweise zu Biegeschwingungen, insb. im Bereich einer momentanen natürlichen Eigenfrequenz, so angeregt, daß in diesem angeregten Schwingungsmode, dem so genannten Nutzmode, zumindest anteilig Biege-Schwingungen um eine das Einlassende und das Auslassende des Messrohrs 10 imaginär verbindende Schwingungsachse ausführt. Erfindungsgemäß wird das Messrohr 10 dabei zu einem solchen Schwingungsmode angeregt, in dem es überwiegend eine erste Schwingungsform mit wenigstens drei Biege-Schwingungsbäuchen einnimmt. Anders gesagt hat dann jene natürliche Eigenschwingungsform mit drei Biege-Schwingungsbäuchen den größten Anteil an der momentanen Ausprägung des angeregten Nutzmodes bzw. dessen Schwingungsform. Die erste Schwingungsform des dergestalt im angeregten Schwingungsmode vibrierenden, also überwiegend drei oder mehr Schwingungsbäuche aufweisenden, Meßrohrs 10 ist dabei im wesentlichen symmetrisch, insb. rotationssymmetrisch, bezüglich einer in Wirkrichtung der Erregerkraft, $F_{exc}$, liegenden gedachten Bezugsachse ausgebildet. Nach einer vorteilhaften Ausgestaltung der Erfindung wird das vibrierende Messrohr 10 aber gezielt so angeregt, daß es überwiegend eine Schwingungsform mit genau drei Biege-Schwingungsbäuchen einnimmt, also überwiegend im so genannten f3-Mode schwingt.

Für den Fall, daß das Fluid in der Rohrleitung strömt und somit der Massedurchfluß m von Null verschieden ist, werden so mittels des in oben beschriebener Weise vibrierenden Meßrohrs 10 im hindurchströmenden Fluid Corioliskräfte induziert. Diese wiederum wirken auf das Meßrohr 10 zurück und bewirken so eine zusätzliche, sensorisch erfaßbare, hier jedoch nicht dargestellte, Verformung des Meßrohrs 10 gemäß einer zweiten Schwingungsform, die dem angeregten Nutzmode des hier geraden Messrohrs 10 koplanar und gleichfrequent überlagert ist. Die momentane Ausprägung der Verformung des Meßrohrs 10 ist dabei, insb. hinsichtlich ihrer Amplituden, auch vom momentanen Massedurchfluß, m, abhängig. Als zweite Schwingungsform, dem so genannten Coriolismode, kann z.B. eine Schwingungsform mit vier Schwingungsbäuchen oder auch symmetrische Schwingungsformen mit sechs oder mehr Schwingungsbäuchen dienen.

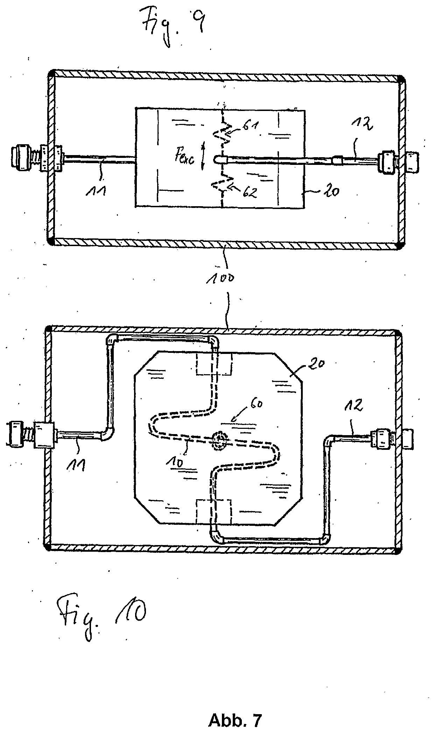

Zum Erzeugen mechanischer Schwingungen des Meßrohrs 10 umfaßt der Meßwandler ferner eine, insb. elektrodynamische, Erregeranordnung 40. Diese dient dazu, eine von einer, hier nicht dargestellten, SteuerElektronik eingespeiste, elektrische Erregerenergie $E_{exc}$, z.B. mit einem geregelten Strom und/oder einer geregelten Spannung, in eine auf das Meßrohr 10, z.B. pulsförmig oder harmonisch, einwirkende und dieses in der vorbeschriebenen Weise elastisch verformende Erregerkraft $F_{exc}$ umzuwandeln. Die Erregerkraft $F_{exc}$ kann hierbei, wie in Fig. 3 oder 9 schematisch dargestellt, bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung 40 kann z.B. eine Tauchspulenanordnung dienen, die wenigstens eine am Meßrohr 10 oder am ersten Trägerelement 20 befestigte zylindrische Erregerspule, die im Betrieb von einem entsprechenden Erregerstrom durchflossen ist, und einen in die Erregerspule zumindest teilweise eintauchenden dauermagnetischen Anker, der am Trägerelement 20 bzw. am Meßrohr 10 fixiert ist, aufweist. Ferner kann die Erregeranordnung 40 auch, wie z.B. in der US-A 45 24 610 gezeigt, mittels eines oder mehrerer Elektromagnete realisiert sein. Darüber hinaus ist es auch möglich, die Erregeranordnung 40, wie z.B. in der WO-A 99 51 946 gezeigt, mittels seismischer Erreger zu realisieren.

Zum Detektieren von Schwingungen des Meßrohr 10 umfaßt der Meßwandler des weiteren eine, insb. elektrodynamische, Sensoranordnung 50. Als Sensoranordnung 50 kann z.B. eine für derartige Meßwandler übliche Sensoranordnung verwendet werden, bei der in der dem Fachmann bekannten Weise mittels wenigstens eines ersten Sensors 51, vorzugsweise aber auch mittels eines zweiten Sensors 52 die Bewegungen des Meßrohrs 10, insb. einlaßseitig und auslaßseitig, erfaßt und in entsprechende Sensorsignale $S_1$, $S_2$ umgewandelt werden. Als Sensoren 51, 52 können z.B., wie auch in Fig. 5 schematisch dargestellt, die Schwingungen von Meßrohr 10 und Gegenschwinger 20 relativ messende, elektrodynamische Geschwindigkeitssensoren oder aber elektrodynamische Wegsensoren oder Beschleunigungssensoren verwendet werden. Anstelle elektrodynamischer Sensoranordnungen können ferner auch mittels resistiver oder piezo-elektrischer Dehnungsmeßstreifen messende oder opto-elektronische Sensoranordnungen zum Detektieren der Schwingungen des Meßrohrs 10 dienen. Die Sensorsignale können in der dem Fachmann bekannten Weise mittels einer entsprechenden, insb. digitalen, Auswerte-Elektronik in die entsprechenden Meßwerte umgewandelt werden. Sowohl die oben erwähnte Steueer-Eletronik für die Erregeranordnung 40 als auch die mit der Sensoranordnung 50 verbundene Auswerte-Elektronik können in einem, vorzugsweise am Wandlergehäuse 100 befestigten, Elektronikgehäuse 200 untergebracht sein.

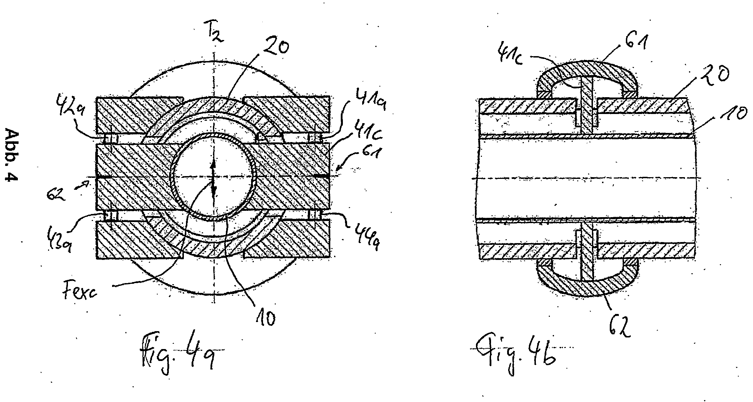

Nach einer weiteren Ausgestaltung der Erfindung ist die Erregeranordnung 40, wie auch in Fig. 3 und 4 gezeigt, so ausgebildet und im Meßwandler angeordnet, daß sie im Betrieb gleichzeitig, insb. differentiell, auf Meßrohr 10 und Gegenschwinger 20 wirkt. In entsprechender Weise kann auch die Sensoranordnung 50 so ausgelegt und im Meßwandler angeordnet sein, daß durch sie die Vibrationen von Meßrohr 10 und Gegenschwinger 20 differentiell erfaßt werden.

Im in Fig. 2 gezeigten Ausführungsbeispiel sind - wie z.B. auch in der eingangs erwähnten WO-A 03/0959950 vorgeschlagen - Meßrohr 10, Trägerelement 20 sowie die daran befestigten Sensor- und Erregeranordnungen 40, 50 hinsichtlich ihrer Massenverteilung so aufeinander abgestimmt, daß das so gebildete, mittels des Ein- und am Auslaßrohrstücks 11, 12 im zweiten Trägerelement 100 aufgehängte Innenteil des Meßwandlers einen Massenschwerpunkt MS aufweist, der zumindest innerhalb des Meßrohrs 10, vorzugsweise aber möglichst nah an der Meßrohrlängsachse L liegt.

Zudem ist das Innenteil zumindest bei Verwendung eines geraden Messrohrs in vorteilhafter Weise so ausgebildet, daß es eine mit den beiden Verbindungsrohrstücken 11, 12 fluchtende und zumindest abschnittsweise innerhalb des Meßrohrs 10 liegende erste Trägheitshauptachse $T_1$ aufweist; Schwingungsachse, Meßrohrlängsachse L und Trägheitshauptachse $T_1$ sind im übrigen beim in Fig. 3 gezeigten Ausführungsbeispiel praktisch koinzident. Aufgrund der Verlegung des Massenschwerpunktes MS des Innenteils, insb. aber auch aufgrund der vorbeschriebenen Lage der ersten Trägheitshauptachse $T_1$ sind die vom Meßrohr 10 betriebsgemäß eingenommenen Schwingungsformen, nämlich die oben erwähnten Bieg-Schwingungen im Nutz- und Coriolismode, mechanisch weitestgehend von allfälligen Torsions-Schwingungen des Messrohrs 10 um die Trägheitshauptachse $T_1$ entkoppelt. Dadurch können nützliche Biege-Schwingungen und nützliche Torsions-Schwingungen einerseits voneinander getrennt angeregt werden; andererseits können störende Torsions-Schwingungen gleichermaßen wirkungsvoll von den Biege-Schwingungen im Nutz- und/oder Coriolismode getrennt werden. Sowohl die Verlegung des Massenschwerpunkts MS als auch der ersten Trägheitshauptachse $T_1$ hin zur Meßrohrlängsachse L kann beispielsweise dadurch erheblich vereinfacht werden, daß das Innenteil, also Meßrohr 10, Trägerelement 20 sowie die daran befestigten Sensor- und Erregeranordnungen 50, 40, so ausgebildet und zueinander angeordnet sind, daß eine Massenverteilung des Innenteils entlang der Meßrohrlängsachse L im wesentlichen symmetrisch, zumindest aber invariant gegenüber einer gedachten Drehung um die Meßrohrlängsachse L um 180° (c2-Symmetrie), ist.

Nach einer weiteren Ausgestaltung der Erfindung ist das hier rohrförmige, im wesentlichen koaxial zum Meßrohr 10 angeordnete Trägerelement 20 auch weitgehend axial-symmetrisch bezüglich der Trägheitshauptachse $T_1$ ausgebildet, wodurch das Erreichen einer symmetrische Massenverteilung des Innenteils erheblich vereinfacht wird und somit auch der Massenschwerpunkt MS in einfacher Weise nah zur Meßrohrlängsachse L hin verlegt wird, vgl. Fig. 3 oder 5. Darüber hinaus sind auch die Sensor- und Erregeranordnungen 50, 40 in vorteilhafter Weise so ausgebildet und zueinander am Meßrohr 10 und ggf. am Gegenschwinger 20 angeordnet, daß ein durch sie erzeugtes Massenträgheitsmoment möglichst konzentrisch zur Meßrohrlängsachse L ausgebildet oder zumindest möglichst klein gehalten ist. Dies kann z.B. dadurch erreicht werden, daß ein gemeinsamer Massenschwerpunkt von Sensor- und Erregeranordnung 50, 40 ebenfalls möglichst nah an der Meßrohrlängsachse L liegt und/oder daß eine Gesamtmasse von Sensor- und Erregeranordnung 50, 40 möglichst klein gehalten ist.

Nach einer weiteren Ausgestaltung der Erfindung ist die Erregeranordnung 40 zum Zwecke der getrennten Anregung von Torsions- und/oder Biegeschwingungen des Meßrohrs 10 oder aber auch zum aktiven Abbremsen von störenden Torsionsschwingungen so ausgebildet und an diesem und am Gegenschwinger 20 so fixiert, daß eine die Biegeschwingungen erzeugende Kraft entlang einer gedachten Kraftlinie auf das Meßrohr 10 wirkt, die außerhalb einer zur ersten Trägheitshauptachse $T_1$ senkrechten zweiten Trägheitshauptachse $T_2$ verläuft oder letztere in höchstens einem Punkt schneidet. Vorzugsweise ist das Innenteil so ausgestaltet, daß die zweite Trägheitshauptachse $T_2$ im wesentlichen mit der oben erwähnten, in der Wirkrichtung der Erregerkraft, $F_{exc}$, liegenden gedachten Bezugsachse übereinstimmt, vgl. Fig. 3 oder 4.

Im in der Fig. 4a gezeigten Ausführungsbeispiel weist die Erregeranordnung 40 dazu wenigstens eine im Betrieb zumindest zeitweise vom Erregerstrom oder einem Erregerteilstrom durchflossene erste Erregerspule 41a auf, die an einem mit dem Meßrohr 10 verbundenen starren Hebel 41c fixiert ist und über diesen und einen von außen am Gegenschwinger 20 fixierten Anker 41b differentiell auf das Meßrohr 10 und den Gegenschwinger 20 einwirkt. Diese Anordnung hat u.a. auch den Vorteil, daß einerseits der Gegenschwinger 20 und somit auch das Wandlergehäuse 100 im Querschnitt klein gehalten und trotzdem die Erregerspule 41a, insb. auch bei der Montage, leicht zugänglich ist. Darüber hinaus besteht eine weiterer Vorteil dieser Ausgestaltung der Erregeranordnung 40 auch darin, daß allfällig verwendete, insb. bei Nennweiten von über 80 mm nicht mehr vernachlässigbar schwere, Spulenbecher 41d ebenfalls am Gegenschwinger 20 zu fixieren sind und somit praktisch keinen Einfluß auf die Resonanzfrequenzen des Meßrohrs 10 haben. Es sei jedoch an dieser Stelle darauf hingewiesen, daß falls erforderlich, die Erregerspule 41a auch vom Gegenschwinger 20 und dementsprechend der Anker 41b vom Meßrohr 10 gehaltert werden können.

Nach einer weiteren Ausgestaltung der Erfindung weist die Erregeranordnung 40 wenigstens eine entlang eines Durchmessers des Meßrohrs 10 angeordnete zweite Erregerspule 42a auf die in gleicher Weise wie die Erregerspule 41a mit dem Meßrohr 10 und dem Gegenschwinger 20 gekoppelt ist. Nach einer Weiterbildung der Erfindung weist die Erregeranordnung zwei weitere, insgesamt also vier zumindest bezüglich der zweiten Trägheitshauptachse $T_2$ symmetrisch angeordnete Erregerspulen 43a, 44a auf, die alle in der vorgenannten Weise im Meßwandler montiert sind.

Die außerhalb der zweiten Trägheitshauptachse $T_2$ auf das Meßrohr 10 einwirkende Kraft kann mittels solcher Zwei- oder Vier-Spulen-Anordnungen in einfacher Weise z.B. dadurch erzeugt werden, daß eine der Erregerspulen, z.B. die Erregerspule 41a, eine andere Induktivität aufweist als die jeweils anderen oder daß eine der Erregerspulen, z.B. die Erregerspule 41a, im Betrieb von einem Erregerteilstrom durchflossen ist, der von einem jeweiligen Erregerteilstrom der jeweils anderen Erregerspulen verschieden ist.

Nach einer weiteren Ausgestaltung der Erfindung umfaßt die Sensoranordnung 50, wie in Fig. 5 schematisch dargestellt, eine außerhalb der zweiten Trägheitshauptachse $T_2$ angeordnete, am Meßrohr 10 fixierte Sensorspule 51a. Die Sensorspule 51a ist möglichst nah zu einem am Gegenschwinger 20 fixierten Anker 51b angeordnet und mit diesem magnetisch so gekoppelt, daß in der Sensorspule eine durch rotatorische und/oder laterale, ihre relative Lage und/oder ihren relativen Abstand verändernde Relativbewegungen zwischen Meßrohr 10 und Gegenschwinger 20 beinflußte, veränderliche Meßspannung induziert wird. Aufgrund der erfindungsgemäßen Anordnung der Sensorspule 51a können in vorteilhafter Weise gleichzeitig sowohl die oben genannten Torsionsschwingungen als auch die ggf. angeregten Biegeschwingungen erfaßt werden. Falls erforderlich können die Sensorspule 51a dazu aber auch am Gegenschwinger 20 und in entsprechender Weise der mit dieser gekoppelte Anker 51 b am Meßrohr 10 fixiert sein.

Es sei hier noch erwähnt, daß falls erforderlich, in der dem Fachmann bekannten Weise, die Erregeranordnung 40 und die Sensoranordnung 50 in ihrem mechanischen Aufbau praktisch auch gleich ausgeführt sein können; überdies lassen sich die vorgenannten Ausgestaltungen des mechanischen Aufbaus der Erregeranordnung 40 im wesentlichen auch auf den mechanischen Aufbau der Sensoranordnung 50 übertragen und umgekehrt.

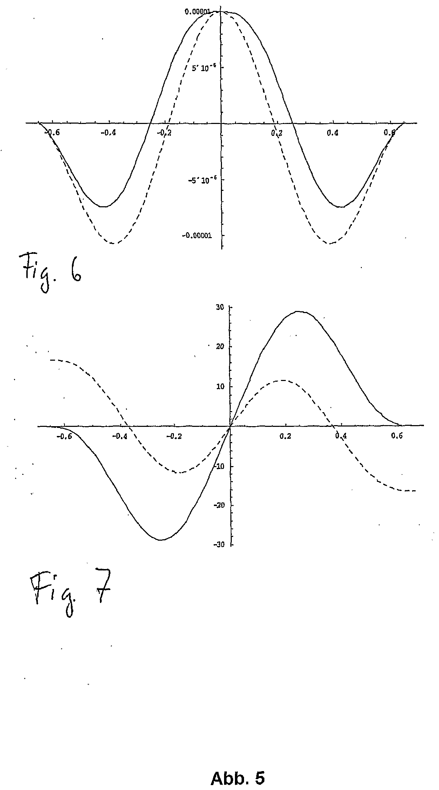

Bei einer Anregung der Biegeschwingungen im Nutzmode werden im in der oben beschriebenen Weise vibrierenden, einzigen Meßrohrs 10 aufgrund von mit den Biegeschwingungen einhergehenden Massenbeschleunigungen bekanntlich entlang des Messrohrs Querkräfte erzeugt. Bei einem in herkömmlicher Weise aufgebauten Innenteil mit einem einfachen, in einem natürlichen symmetrischen Eigenmode schwingenden Messrohr 10 und einem als Gegenschwinger wirkenden ersten Trägerelement ist eine Resultierende vorgenannter Querkräfte bei erheblich schwankender Dichte, p, nicht mehr vernachlässigbar klein. Beispielsweise würden sich bei einem herkömmlichen Meßwandler der beschriebenen Art mit einem als Meßrohr 10 dienenden Titanrohr, das eine Nennweite von 18 mm, eine Wandstärke von etwa 1 mm und eine Länge von etwa 660 mm aufweist und mit Wasser als Medium gefüllt ist, für den in Fig. 6 schematisch dargestellten f3-Mode (gestrichelte Linie) in etwa eine Schwingungsfrequenz von 950...1000 Hz und bei einer Schwingungsamplitude von ca. 10 $\mu$m eine resultierende Querkraft, $Q_{10}$, wie auch Fig. 7 entnehmbar (gestrichelte Line), von insgesamt etwa 30 N ergeben.

Für den Fall, daß diese vom vibrierenden Meßrohr 10 verursachte resultierenden Querkraft, $Q_{10}$, nicht kompensiert wird, verbleibt ein Querimpuls im Innenteil bzw. im Meßwandler, was wiederum dazu führt, daß das Meßrohr 10 zusammen mit dem daran fixierten ersten Trägerelement 20 lateral aus der zugewiesenen statischen Ruhelage verschoben werden. Dementsprechend würde die Querkraft, $Q_{10}$, - hier über die Verbindungsrohrstücke 11, 12 - zumindest teilweise auch auf die angeschlossene Rohrleitung wirken und diese somit gleichfalls vibrieren lassen. Außerdem würden praktisch unvermeidliche mechanische Unsymmetrien im Meßwandler und/oder in der angeschlossenen Rohrleitung zwangsläufig zur Anregung parasitärer asymmetrischer Schwingungsmoden führen, die den Schwingungen des Coriolismodes in nicht mehr ohne weiters separierbarer Weise gleichfrequent überlagert sind. Infolgedessen kann es beispielsweise bei der Messwertgenerierung im besonderen auch zu erheblichen Nullpunktfehlern kommen.

Zur Minimierung solcher vom vibrierenden Messrohr generierten, insb. auch auf die Rohrleitung wirkenden und daher für die Messung schädlichen, oszillierenden Querkräfte ist daher im Meßwandler ferner eine mit Messrohr 10 und Trägerelement 20 verbundene Koppleranordnung 60 vorgesehen, die wenigstens ein mit dem vibrierenden Messrohr 10 und dem Trägerelement 20 mechanisch, insb. feder-elastisch, wechselwirkendes erstes Koppelement 61 umfaßt. Das wenigstens eine Koppelement 61 der Koppleranordnung 60 ist hierbei derart mit dem Messrohr 10 und dem Trägerelement 20 mechanisch gekoppelt ist, daß es in einem, insb. zentralen, Bereich eines der wenigstens drei Schwingungsbäuche auf das Messrohr 10 einwirkt. Infolgedessen gelangt zwischen Messrohr 10 und Trägerelement 20 auch eine durch das wenigstens eine Koppelement 61 bestimmte Federsteifigkeit, $c_{60}$, der Koppleranordnung 60 zur Wirkung.

Die Wirkung der erfindungsgemäßen Koppleranordnung 60 besteht nunmehr darin, daß die oben erwähnte erste Schwingungsform des Messrohrs 10 mit daran eingreifender Koppleranordnung, wie auch in Fig. 6 schamisch dargestellt( durchgezogene Linie), im angeregten Nutzmode im Vergleich zu einer Schwingungsform eines lediglich endseitig eingespannten, sonst aber im wesentlichen frei in einem die gleiche Anzahl Schwingungsbäuche aufweisenden natürlichen Schwingungsmode schwingenden Messrohr (Fig. 6, gestrichelte Linie) überraschenderweise derart deformiert ist, daß sich die durch die bewegten Massen des schwingenden Messrohrs 10 verursachten lateralen Beschleunigungskräfte, wie auch in Fig. 7 (durchgezogene Linie) schematisch dargestellt, gegenseitig im wesentlichen neutralisieren. Gleichermaßen werden überraschenderweise aber auch jene Biegekräfte, die ebenfalls durch das im Nutzmode oszillierende Messrohr 10 in den gemeinsamen Verbindungsstellen von Messrohr 10 und Trägersystem 20 - hier den gemeinsamen Verbindungsstellen von Messrohr 10, Trägersystem 20 und Verbindungsrohrstücken 11, 12 - verursacht werden, dadurch weitgehend kompensiert, daß entsprechende Federkräfte in dem wenigstens einen Koppelement 61 induziert und über das damit verbundene Trägerelement 20 zu den genannten Biegekräften gegenläufig in die gemeinsamen Verbindungsstellen von Messrohr 10 und Trägersystem 20 eingeleitet werden.

Gemäß einer weiteren Ausgestaltung der Erfindung wird das Messrohr 10 mittels der Erregeranordnung 40 so angeregt, daß der Nutzmode mit der oben erwähnten Biege-Schwingungsform im wesentlichen einem natürlichen Eigenmode des Messwandlers entspricht, der im wesentlichen durch das Messrohr 10 und die darauf einwirkende Koppleranordnung 60 bestimmt ist. Anders gesagt, soll das Messrohr 10 im Nutzmode mit einer natürlichen Eigenfrequenz oszillieren, die im wesentlichen sowohl durch die Schwingungseigenschaften des Messrohrs 10 mit dem hindurchströmenden Fluid als auch durch die Schwingungseigenschaften der auf das Messrohr 10 einwirkenden Koppleranordnung 60 bestimmt ist.

Bei dem erfindungsgemäßen Koppelement

61 kann es sich beispielsweise um im wesentlichen federelastisch wirkenden Koppelelemente mit positiver Federkonstante, also einfache Spiral- oder Blattfedern oder dergleichen, handeln, die sowohl am Meßrohr 10 als auch am Trägerelement 20 in geeigneter Weise fixiert sind. Allerdings können auch solche Koppelelemente verwendet werden, die eine elektrisch einstellbare negative Federkonstante aufweisen, also eine oder mehrere zumindest anteilig von einem entsprechenden Gleichstrom durchflossenen Magnetspulen, vgl. hierzu auch die eingangs erwähnte US-A 55 31 126. Beispielsweise kann somit die oben genannte Erregeranordnung mit den Erregerspulen gleichzeitig als Koppleranordnung dienen.

Nach einer Ausgestaltung der Erfindung ist das wenigstens eine Koppelelement 61 als eine mechanisch Feder ausgebildet und, wie in den Fig. 4a und 4b gezeigt, zum einen ebenfalls an dem mit dem Meßrohr 10 verbundenen Hebel 41 c fixiert. Zum anderen ist das Koppelelement auch direkt am Gegenschwinger fixiert. Durch das Koppelelement sind Meßrohr 10 und Trägerelement 20 nicht nur endseitig im wesentlichen radial starr, sondern zusätzlich auch in einem betriebsgemäß gegenphasig schwingenden, hier zentralen, Abschnitt radial im wesentlichen federelastisch miteinander verbunden. Dementsprechend ist auch das Koppelelement 61 im Betrieb aufgrund von Relativbewegungen des schwingenden Messrohrs 10 und des Trägerelements 20 zwangsläufig wiederholt elastischen Verformungen unterworfen. Im gezeigten Ausführungsbeispiel ist das Koppelelement als eine einfache, ggf. in einer Ebene leicht gebogene, Blattfeder ausgebildet, die mit einem mittleren Abschnitt am Hebel 41 c angebracht ist, beispielsweise, wie in Fig. 2a, b oder 4 schematisch dargestellt, durch Einlöten in einen stirnseitig in den Hebel 41 c eingeformten Schlitz.

Gemäß einer vorteilhaften Weiterbildung der Erfindung ist in der Koppleranordnung ferner zusätzlich zum ersten Koppelelement 61 ein, insb. zu diesem im wesentlichen baugleich ausgebildetes, zweites Koppelelement 62 vorgesehen, das ebenfalls im Bereich eines der Biege-Schwingungsbäuche des Meßrohrs auf dieses einwirkt. In vorteilhafter Weise sind die beiden Koppelemente dabei so im Meßwandler angeordnet, daß die Koppleranordnung 60 zumindest bezüglich der oben erwähnten, in Wirkrichtung der Erregerkraft, $F_{exc}$, liegenden gedachten Bezugsachse im wesentlichen symmetrisch ausgebildet ist.

Untersuchungen haben ferner ergeben, daß die oben genannten Querkräfte allein mittels der Koppleranordnung weitgehend kompensiert werden können, wenn die durch das wenigstens eine Koppelelement bestimmte und zwischen Messrohr 10 und Trägerelement 20 wirksame Federsteifigkeit, $c_{60}$, der Koppleranordnung 60 oberhalb des 0,5-fachen eines Verhältnis, $Q_{10}/x_0$, liegt, das die durch das vibrierende Messrohr 10 einlaßseitig und auslaßseitig in das Trägerelement 20 und/oder in die angeschlossene Rohrleitung insgesamt

eingeleitet Querkraft, $Q_{10}$, bezogen auf eine laterale Auslenkung, $x_0$, eines Angriffspunktes repräsentiert, in dem die Koppleranordnung 60 letztlich auf das Messrohr 10 einwirkt. Sehr gute Ergebnisse hinsichtlich der Kompensation der Querkräfte, $Q_{10}$, können dabei im besonderen erzielt werden, wenn die Federsteifigkeit, $c_{60}$, der Koppleranordnung 60 etwa im Bereich des 0,7-fachen bis 1,3-fachen des vorgenannten Verhältnises, $Q_{10}/x_0$, liegt ist.

Ferner konnte festgestellt werden, daß - alternativ oder ergänzend zur vorangehenden Dimensionierungsregel - die Federsteifigkeit, $c_{60}$, der Koppleranordnung 60 für eine zentral am im f3-Mode schwingenden Messrohr 10 angreifende Koppleranordnung basierend auf folgender mathematischen Beziehung ebenfalls sehr leicht ermittelt oder zumindest näherungsweise sehr gut abgeschätzt werden kann:

$$c_{60} = \alpha \cdot \frac{E \cdot J}{l^3}$$

(1)

worin

$\alpha$ - eine mit einem Eigenwert der Biege-Schwingungsform des angeregten Nutzmodes korrespondierende, insb. dazu proportionale, Konstante,

E - Elastizitätsmodul (E- oder Young-Modul) des verwendeten Messrohr-Materials,

J - Flächenträgheitmoment des verwendete Messrohrs und

I - totale oder "abgewickelte" Länge des Messrohrs oder der Biegelinie sind.

Für im wesentlichen gerade Messrohre beträgt die Konstante $\alpha$ etwa 4000, während sie für im wesentlichen S-förmig gebogene Messrohre mit etwa 600 zu veranschlagen ist.

Für den Fall, daß das Messrohr 10, wie auch in Fig. 3 gezeigt, im wesentlichen gerade ausgebildet ist führt die Anwendung der vorgenannten Dimensionierungsregeln jeweils dazu, daß die Federsteifigkeit, $c_{60}$, der Koppleranordnung 60 dann mindestens auf ein 10-faches, bei Verwendung herkömmlicher Materialien und Abmessungen insb. auf etwa ein 20-faches, der Federsteifigkeit, $c_{10}$, des Messrohrs 10 eingestellt ist. Für den Fall, daß das Messrohr im wesentlichen in einer Ebene gekrümmt ausgebildet, insb. S- förmig gebogen, ist, führt die Anwendung der Dimensionierungsregel wiederum dazu, daß die Federsteifigkeit, $c_{60}$, der Koppleranordnung mindestens auf ein 0,8-faches einer in Wirkrichtung der Querkraft, $Q_0$, wirksamen Federsteifigkeit, $c_{10}$, des Messrohrs 10 einzustellen ist.

Weitere Verbesserungen hinsichtlich der Kompensation der Querkräfte lassen sich ferner dadurch erzielen, daß das erste Trägerelement 20 eine gleichfalls in Wirkrichtung der Querkraft, $Q_0$, wirksame Federstei-

figkeit, $c_{20}$, aufweist, die von der Federsteifigkeit, $c_{10}$, des Messrohrs 10 verschieden ist. Demgemäß ist die Federsteifigkeit, $c_{10}$, des Messrohrs 10 in einer weiteren vorteilhaften Ausgestaltung der Erfindung, insb. um wenigstens ein 5-faches, niedriger gewählt als die Federsteifigkeit, $c_{20}$, des ersten Trägerelements 20. Alternativ oder auch zusätzlich dazu ist nach einer Ausgestaltung der Erfindung eine Schwingungsfrequenz der Biege-Schwingungen des Messrohrs 10 so gewählt, daß sie im Betrieb stets niedriger gehalten ist, als eine niedrigste mechanische Resonanzfrequenz des Trägerelements 20.

Nach einer weiteren Ausgestaltung der Erfindung ist das biegesteife Trägerelement 20 im Vergleich zum Messrohr 10 sehr schwer ausgebildet. Demgemäß ist bei dieser Ausgestaltung der Erfindung eine Masse des ersten Trägerelements 20 so gewählt, daß eine Gesamtmasse von Messrohr 10 mit darin enthaltenem Fluid niedriger ist als diese Trägerelement-Masse.

Ein weiterer Vorteil der Erfindung ist aber auch darin zu sehen, daß die guten Ergebnisse hinsichtlich der Neutralisierung der vom vibrierenden Messrohr induzierten Querkräfte überraschenderweise auch dann erzielt werden können, wenn das das Messrohr einspannende, biegesteife erste Trägerelement 20 und somit auch der gesamte Messaufnehmer sehr leicht ausgeführt sind.

Demgemäß kann die Masse des ersten Trägerelements 20 auch so gewählt, daß die Gesamtmasse von Messrohr 10 mit darin enthaltenem Fluid höher ist als diese Trägerelement-Masse. Ein biegesteifes und gleichermaßen leichtes Trägerelement kann beim in Fig. 3 gezeigten Ausführungsbeispiel auf einfache Weise z.B. durch seitlich am rohrförmigen Trägerelement 20 angebrachte stab- oder balkenförmige Verstärkungen erreicht werden, die sich im wesentlichen parallel zur Meßrohrlängsachse L erstrecken. Eine weitere Möglichkeit zur Schaffung eines vergleichsweise leichten, gleichwohl aber auch sehr biegesteifen Trägerelements 20 besteht in der Verwendung entsprechender Materialien mit einem hohen E-Modul und einer geringer Dichte, wie z.B. Glas, Keramik, Glaskeramik, mit Glas- und/oder Kohlefasern verstärkter Kunststoff oder dergleichen.

Überdies hat es sich überraschenderweise gezeigt, daß mittels der im Ausführungsbeispiel gezeigten Koppleranordnung 60 mit über den Hebel 41 c jeweils praktisch exzentrisch am Messrohr 10 angreifenden - hier sichelförmig ausgebildeten - Blattfedern nicht nur auch eine sehr wirkungsvolle Verstimmung solcher lateralen Biege-Schwingungsmoden erzielt werden kann, deren Schwingungsrichtung senkrecht zur gemeinsamen Schwingungsrichtung des Nutz- und Coriolismodes verläuft, sondern, daß, insb. auch im Gegensatz zu dem in der US-A 52 91 792 gezeigten Meßwandler, trotz dieser durchaus erwünschten Verstimmung solcher störenden Biege-Schwingungsmoden die Schwingungseigenschaften allfällig zusätzlich - simultan oder alternierend - angeregter nützlicher Torsions-Schwingungen um die oben erwähnte Ein- und Auslassende des Messrohrs imaginär verbindende Schwingungsachse, wie sie beispielsweise auch bei Meßwandler gemäß der US-B 68 40 109 angeregt werden können, kaum beeinflusst werden.

Für den Fachmann besteht im übrigen auch keinerlei Schwierigkeit darin, zu erkennen, daß die erfindungsgemäße Koppleranordnung 60 vorzugsweise so auszubilden ist, daß eine resultierende Wirkungslinie aller durch sie insgesamt erzeugten Federkräfte im wesentlichen mit der oben erwähnten, in Wirkrichtung der Erregerkraft, $F_{exc}$, liegenden gedachten Bezugsachse koinzidiert. Darüber hinaus ist die Koppleranordnung 60 für die meisten praktischen Anwendungen auch so auszuführen, daß eine Verteilung aller durch sie insgesamt erzeugten Federkräfte im wesentlichen symmetrisch bezüglich vorgenannter Bezugsachse ausgebildet ist.

## Patentansprüche

1. Meßwandler vom Vibrationstyp für ein in einer Rohrleitung strömendes Fluid, welcher Meßwandler umfaßt:

    - ein in den Verlauf der Rohrleitung eingesetztes, im Betrieb zumindest zeitweise vibrierendes Meßrohr (10) zum Führen des Fluids,
    - ein an einem Einlassende und an einem Auslassende des Messrohrs (10) fixiertes erstes Trägerelement (20),
    - eine elektro-mechanische Erregeranordnung (40) zum Erzeugen einer das Meßrohr (10) virbrienlassenden zeitlich veränderlichen Erregerkraft, $F_{exc}$,
    - eine Sensoranordnung (50) zum Erfassen von Schwingungen des Meßrohrs (10), sowie
    - eine mit Messrohr (10) und Trägerelement (20) verbundene Koppleranordnung (60) mit wenigstens einem mit dem vibrierenden Messrohr (10) und dem Trägerelement (20) mechanisch, insb. federelastisch, wechselwirkenden Koppelelement (61),
    - wobei das Messrohr (10) im Betrieb mittels der Erregeranordnung (40) zumindest zeitweise zu einem Schwingungsmode angeregt ist, in dem es zumindest anteilig solche Biege-Schwingungen um eine das Einlassende und das Auslassende des Messrohrs (10) imaginär verbindende Schwingungsachse ausführt, dass es überwiegend eine Schwingungsform mit wenigstens drei Biege-Schwingungsbäuchen einnimmt,
    - wobei das wenigstens eine Koppelelement (61) der Koppleranordnung (60) derart mit dem Messrohr (10) und dem Trägerelement (20) mechanisch gekoppelt ist, daß es in einem, insb. zentralen, Bereich eines der wenigstens drei Schwingungsbäuche auf das Messrohr (10) einwirkt,

- wobei das Meßrohr (10) im wesentlichen gerade ist, und
- wobei eine durch das wenigstens eine Koppelelement (61) bestimmte, zwischen Messrohr (10) und Trägerelement (20) wirksame, insb. im wesentlichen konstante, Federsteifigkeit, $c_{60}$, der Koppleranordnung (60) oberhalb des 0,5-fachen, insb. im Bereich des 0,7-fachen bis 1,3-fachen, eines Verhältnis, $Q_{10}/x_0$, liegt, das eine durch das vibrierende Messrohr (10) einlaßseitig und auslaßseitig in das Trägerelement (20) und/oder in die angeschlossene Rohrleitung insgesamt eingeleitet Querkraft, $Q_{10}$, bezogen auf eine laterale Auslenkung, $x_{10}$, eines Angriffspunktes repräsentiert, in dem die Koppleranordnung (60) auf das Messrohr (10) einwirkt, derart, daß die Federsteifigkeit, $c_{60}$, der Koppleranordnung (60) mindestens auf ein 10-faches, insb. auf etwa ein 20-faches, einer in Wirkrichtung der Querkraft, $Q_{10}$, wirksamen Federsteifigkeit, $c_{10}$, des Messrohrs (10) eingestellt ist.

**2.** Meßwandler vom Vibrationstyp für ein in einer Rohrleitung strömendes Fluid, welcher Meßwandler umfaßt:

- ein in den Verlauf der Rohrleitung eingesetztes, im Betrieb zumindest zeitweise vibrierendes Meßrohr (10) zum Führen des Fluids,
- ein an einem Einlassende und an einem Auslassende des Messrohrs (10) fixiertes erstes Trägerelement (20),
- eine elektro-mechanische Erregeranordnung (40) zum Erzeugen einer das Meßrohr (10) virbrienlassenden zeitlich veränderlichen Erregerkraft, $F_{exc}$,
- eine Sensoranordnung (50) zum Erfassen von Schwingungen des Meßrohrs (10), sowie
- eine mit Messrohr (10) und Trägerelement (20) verbundene Koppleranordnung (60) mit wenigstens einem mit dem vibrierenden Messrohr (10) und dem Trägerelement (20) mechanisch, insb. federelastisch, wechselwirkenden Koppelelement (61),
- wobei das Messrohr (10) im Betrieb mittels der Erregeranordnung (40) zumindest zeitweise zu einem Schwingungsmode angeregt ist, in dem es zumindest anteilig solche Biege-Schwingungen um eine das Einlassende und das Auslassende des Messrohrs (10) imaginär verbindende Schwingungsachse ausführt, dass es überwiegend eine Schwingungsform mit wenigstens drei Biege-Schwingungsbäuchen einnimmt,
- wobei das wenigstens eine Koppelelement (61) der Koppleranordnung (60) derart mit dem Messrohr (10) und dem Trägerelement (20) mechanisch gekoppelt ist, daß es in einem, insb.

zentralen, Bereich eines der wenigstens drei Schwingungsbäuche auf das Messrohr (10) einwirkt,

- wobei das Meßrohr (10) gekrümmt, insb. im wesentlichen S-förmig gebogen, ist, und
- wobei eine durch das wenigstens eine Koppelelement (61) bestimmte, zwischen Messrohr (10) und Trägerelement (20) wirksame, insb. im wesentlichen konstante, Federsteifigkeit, $c_{60}$, der Koppleranordnung (60) oberhalb des 0,5-fachen, insb. im Bereich des 0,7-fachen bis 1,3-fachen, eines Verhältnis, $Q_{10}/x_0$, liegt, das eine durch das vibrierende Messrohr (10) einlaßseitig und auslaßseitig in das Trägerelement (20) und/oder in die angeschlossene Rohrleitung insgesamt eingeleitet Querkraft, $Q_{10}$, bezogen auf eine laterale Auslenkung, $x_{10}$, eines Angriffspunktes repräsentiert, in dem die Koppleranordnung (60) auf das Messrohr (10) einwirkt, derart, daß die Federsteifigkeit, $c_{60}$, der Koppleranordnung mindestens auf ein 0,8-faches einer in Wirkrichtung der Querkraft, $Q_{10}$, wirksamen Federsteifigkeit, $c_{10}$, des Messrohrs (10) eingestellt ist.

**3.** Meßwandler nach Anspruch 1 oder 2,

- wobei das Messrohr (10) im Betrieb mittels der Erregeranordnung (40) zumindest zeitweise zu einem Schwingungsmode angeregt ist, in dem es zumindest anteilig Torsions-Schwingungen um im wesentlichen dieselbe das Einlassende und das Auslassende des Messrohrs (10) imaginär verbindende Schwingungsachse ausführt, und
- wobei die Koppelelemente (61, 62) als Blattfedern ausgebildet sind, die über einen Hebel (41c) mit dem Messrohr (10) verbunden sind.

**4.** Messwandler nach einem der vorherigen Ansprüche, bei dem das wenigstens eine Koppelelement im Betrieb aufgrund von Relativbewegungen des schwingenden Messrohrs (10) und des Trägerelements (20) wiederholt elastischen Verformungen unterworfen ist.

**5.** Messwandler nach dem vorherigen Anspruch, bei dem das wenigstens eine Koppelelement (61) Meßrohr (10) und Trägerelement (20) federelastisch miteinander verbindet.

**6.** Messwandler nach einem der vorherigen Ansprüche, bei dem das Messrohr (10), insb. dessen Schwingungsform im angeregten Schwingungsmodes, im wesentlichen symmetrisch, insb. rotationssymmetrisch, bezüglich einer in Wirkrichtung der Erregerkraft, $F_{exc}$, liegenden imaginären Bezugsachse ausgebildet ist.

7.  Messwandler einem der vorherigen Ansprüche, bei dem das erste Trägerelement (20) eine gleichfalls in Wirkrichtung der Querkraft, $Q_{10}$, wirksame Federsteifigkeit, $c_{20}$, aufweist, die von der Federsteifigkeit, $c_{10}$, des Messrohrs (10) verschieden ist.

8.  Messwandler nach dem vorherigen Anspruch, bei dem die Federsteifigkeit, $c_{10}$, des Messrohrs (10) niedriger gewählt als die Federsteifigkeit, $c_{20}$, des ersten Trägerelements (20).

9.  Messwandler nach einem der vorherigen Ansprüche, bei dem eine Gesamtmasse von Messrohr (10) mit darin enthaltenem Fluid niedriger gewählt ist als eine Masse des ersten Trägerelements.

10. Messwandler nach einem der vorherigen Ansprüche, bei dem der angeregte Schwingungsmode im wesentlichen einem natürlichen Eigenmode des Messrohrs (10) mit der darauf einwirkenden Koppleranordnung (60) entspricht.

11. Messwandler nach dem vorherigen Anspruch, bei dem das vibrierende Messrohr (10) überwiegend eine Schwingungsform mit genau drei Biege-Schwingungsbäuchen einnimmt.

12. Messwandler nach einem der vorherigen Ansprüche, bei dem eine Schwingungsfrequenz der Biege-Schwingungen des Messrohrs (10) im Betrieb stets niedriger gehalten ist, als eine niedrigste mechanische Resonanzfrequenz des Trägerelements (20).

13. Meßwandler nach einem der vorherigen Ansprüche, bei dem sich das erste Trägerelement (20) zumindest abschnittsweise entlang des Messrohrs (10) erstreckt.

14. Meßwandler nach dem vorherigen Anspruch, bei dem das Meßrohr (10) zumindest teilweise vom, insb. im wesentlichen rohrförmig ausgebildeten, ersten Trägerelement (20) umhüllt ist.

15. Meßwandler nach dem vorherigen Anspruch, bei dem das Meßrohr (10) und das erste Trägerelement (20) zueinander im wesentlichen koaxial ausgerichtet sind.

16. Meßwandler nach einem der vorherigen Ansprüche, bei dem das Meßrohr (10) über ein in das Einlassende einmündendes erstes Verbindungsrohrstück (11) und über ein in das Auslassende einmündendes, insb. mit dem ersten Verbindungsrohrstück (11) und/oder mit der Schwingungsachse fluchtendes, zweites Verbindungsrohrstück (12) mit der Rohrleitung kommuniziert.

17. Meßwandler nach dem vorherigen Anspruch, bei dem das erste Trägerelement (20) als einen einlaßseitig und auslaßseitig am Meßrohr (10) fixierter Gegenschwinger (20') ausgebildet ist und bei dem das Meßrohr und das erste Trägerelement (20) über das erste und das zweite Verbindungsrohrstück (11, 12) schwingfähig in einem, insb. als Aufnehmer-Gehäuse ausgebildeten, zweiten Trägerelement (100) aufgehängt sind.

## Claims

1.  Vibronic-type transducer for a fluid flowing through a pipe, said transducer comprising:

    - a measuring tube (10) inserted in the course of the pipe, and vibrating at least temporarily during operation, designed to conduct the fluid
    - a first support element (20) fixed at an inlet end and at an outlet end of the measuring tube (10),
    - an electromagnetic exciter arrangement (40) designed to generate an exciter force, $F_{exc}$, which varies over time, to make the measuring tube vibrate (10),
    - a sensor arrangement (50) designed to measure the vibrations of the measuring tube (10), as well as
    - a coupler arrangement (60), connected to the measuring tube (10) and support element (20), with at least one coupling element (61) that interacts mechanically, particularly in a spring-elastic manner, with the vibrating measuring tube (10) and the support element (20),
    - wherein, during operation, the measuring tube (10) is excited to a vibration mode at least temporarily by the exciter arrangement (40), wherein in said mode it at least partially executes such flexural vibrations around an axis of vibration connecting the inlet end and the outlet end of the measuring tube (10) in an imaginary manner that it essentially adopts a vibration form with at least three flexural vibration antinodes,
    - wherein the at least one coupling element (61) of the coupler arrangement (60) is mechanically coupled to the measuring tube (10) and the support element (20) in such a way that it acts on the measuring tube (10) in an area, particularly a central area, of one of the at least three antinodes,
    - wherein the measuring tube (10) is essentially straight, and
    - wherein a spring rigidity, $c_{60}$, of the coupler arrangement (60), which is determined by the at least one coupling element (61) and acts between the measuring tube (10) and the support element (20), notably an essentially constant spring rigidity, is more than 0.5 times, notably in the range of 0.7 to 1.3 times, a ratio $Q_{10}/x_0$ that

represents a transversal force, $Q_{10}$, which is introduced by the vibrating measuring tube (10) at the inlet side and the outlet side into the carrier element (20) and/or into the connected pipe overall, in relation to a lateral deviation $X_{10}$ of a point of attack at which the coupler arrangement (60) acts on the measuring tube (10), in such a way that the spring rigidity $c_{60}$ of the coupler arrangement (60) is set to at least 10 times, notably to around 20 times, a spring rigidity $c_{10}$ of the measuring tube (10) that acts in the direction of action of the transverse force, $Q_{10}$, of the measuring tube (10).

2. Vibronic-type transducer for a fluid flowing through a pipe, said transducer comprising:

- a measuring tube (10) inserted in the course of the pipe, and vibrating at least temporarily during operation, designed to conduct the fluid
- a first support element (20) fixed at an inlet end and at an outlet end of the measuring tube (10),
- an electromagnetic exciter arrangement (40) designed to generate an exciter force, $F_{exc}$, which varies over time, to make the measuring tube vibrate (10),
- a sensor arrangement (50) designed to measure the vibrations of the measuring tube (10), as well as
- a coupler arrangement (60), connected to the measuring tube (10) and support element (20), with at least one coupling element (61) that interacts mechanically, particularly in a spring-elastic manner, with the vibrating measuring tube (10) and the support element (20),
- wherein, during operation, the measuring tube (10) is excited to a vibration mode at least temporarily by the exciter arrangement (40), wherein in said mode it at least partially executes such flexural vibrations around an axis of vibration connecting the inlet end and the outlet end of the measuring tube (10) in an imaginary manner that it essentially adopts a vibration form with at least three flexural vibration antinodes,
- wherein the at least one coupling element (61) of the coupler arrangement (60) is mechanically coupled to the measuring tube (10) and the support element (20) in such a way that it acts on the measuring tube (10) in an area, particularly a central area, of one of the at least three antinodes,
- wherein the measuring tube (10) is curved, particularly is essentially bent in the shape of an S, and
- wherein a spring rigidity, $c_{60}$, of the coupler arrangement (60), which is determined by the at least one coupling element (61) and acts between the measuring tube (10) and the support element (20), notably an essentially constant spring rigidity, is more than 0.5 times, notably in the range of 0.7 to 1.3 times, a ratio $Q_{10}/x_0$ that represents a transversal force, $Q_{10}$, which is introduced by the vibrating measuring tube (10) at the inlet side and the outlet side into the carrier element (20) and/or into the connected pipe overall, in relation to a lateral deviation $X_{10}$ of a point of attack at which the coupler arrangement (60) acts on the measuring tube (10), in such a way that the spring rigidity $c_{60}$ of the coupler arrangement is set to at least 0.8 times a spring rigidity $c_{10}$ of the measuring tube (10) that acts in the direction of action of the transverse force, $Q_{10}$.

3. Transducer as claimed in Claim 1 or 2,

- wherein, during operation, the measuring tube (10) is excited at least temporarily to a vibration mode in which it at least partially executes torsional vibrations around essentially the same axis of vibration connecting the inlet end and the outlet end of the measuring tube (10) in an imaginary manner, and
- wherein the coupling elements (61, 62) are designed as flat springs that are connected to the measuring tube (10) via a lever (41 c).

4. Transducer as claimed in one of the previous claims, wherein the at least one coupling element is repeatedly subject, during operation, to elastic deformations due to relative movements of the vibrating measuring tube (10) and the support element (20).

5. Transducer as claimed in the previous claim, wherein the at least one coupling element (61) interconnects the measuring tube (10) and the support element (20) in a spring-elastic manner.

6. Transducer as claimed in one of the previous claims, wherein the measuring tube (10), notably its vibration form in the excited vibration mode, is essentially symmetrical, particularly rotationally symmetrical, in relation to an imaginary axis of reference located in the direction of action of the exciter force $F_{exc}$.

7. Transducer as claimed in one of the previous claims, wherein the first support element (20) has a spring rigidity, $c_{20}$, which also acts in the direction of action of the transversal force, $Q_{10}$, said rigidity being different to the spring rigidity, $c_{10}$, of the measuring tube (10).

8. Transducer as claimed in the previous claim, wherein the spring rigidity, $c_{10}$, of the measuring tube (10) is selected as less than the spring rigidity, $c_{20}$, of the first support element (20).

9. Transducer as claimed in one of the previous claims, wherein a total mass of the measuring tube (10), with the fluid it contains, is selected as less than a mass of the first support element.

10. Transducer as claimed in one of the previous claims, wherein the excited vibration mode essentially corresponds to a natural eigenmode of the measuring tube (10) with the coupler arrangement (60) acting thereupon.

11. Transducer as claimed in the previous claim, wherein the vibrating measuring tube (10) largely adopts a vibration form with precisely three antinodes.

12. Transducer as claimed in one of the previous claims, wherein, during operation, a vibration frequency of the flexural vibrations of the measuring tube (10) is always kept lower than a lowest mechanical resonance frequency of the support element (20).

13. Transducer as claimed in one of the previous claims, wherein the first support element (20) extends at least in sections along the measuring tube (10).

14. Transducer as claimed in the previous claim, wherein the measuring tube (10) is at least partially surrounded by the first support element (20), which particularly is essentially tubular in shape.

15. Transducer as claimed in the previous claim, wherein the measuring tube (10) and the first support element (20) are essentially coaxially aligned in relation to one another.

16. Transducer as claimed in one of the previous claims, wherein the measuring tube (10) communicates with the pipe via a first connecting tube segment (11) that enters into the inlet end and via a second tube segment (12) that enters into the outlet end, and is particularly aligned with the first connecting tube segment (11) and/or with the axis of vibration.

17. Transducer as claimed in the previous claim, wherein the first support element (20) is designed as a counter-vibrator (20') fixed on the measuring tube (10) on the inlet side and outlet side, and wherein the measuring tube and the first support element (20) are suspended in a manner in which they are able to vibrate in a second support element (100), particularly designed as a sensor housing, by means of the first and second connecting tube segment (11, 12).

**Revendications**

1. Transducteur du type à vibrations destiné à un fluide s'écoulant dans une conduite, lequel transducteur comprend :

   - un tube de mesure (10) vibrant au moins temporairement en fonctionnement, placé dans le cours de la conduite et destiné à guider le fluide
   - un premier élément support (20) fixé en une extrémité d'entrée et en une extrémité de sortie du tube de mesure (10),
   - un circuit d'excitation électromécanique (40) destiné à générer une force d'excitation, $F_{exc}$, variable dans le temps, faisant entrer en vibration le tube de mesure (10),
   - un circuit capteur (50) destiné à mesurer les vibrations du tube de mesure (10), ainsi que
   - un dispositif coupleur (60) relié avec le tube de mesure (10) et l'élément support (20), lequel dispositif coupleur comprend au moins un élément de couplage (61) interagissant mécaniquement, notamment de façon élastique, avec le tube de mesure (10) vibrant et l'élément support (20),
   - pour lequel le tube de mesure (10) est excité au moins temporairement, en fonctionnement, en un mode de vibration au moyen du circuit d'excitation (40), mode dans lequel il exécute au moins partiellement des vibrations de flexion autour d'un axe de vibration reliant de façon imaginaire l'extrémité d'entrée et l'extrémité de sortie du tube de mesure (10), de telle manière qu'il adopte pour l'essentiel une forme de vibration avec au moins trois ventres de vibration de flexion,
   - pour lequel l'au moins un élément de couplage (61) du dispositif coupleur (60) est couplé mécaniquement avec le tube de mesure (10) et l'élément support (20) de telle sorte à agir sur le tube de mesure (10) dans une zone, notamment centrale, de l'un des au moins trois ventres de vibration,
   - pour lequel le tube de mesure (10) est pour l'essentiel droit, et
   - pour lequel une rigidité élastique, $c_{60}$, notamment pour l'essentiel constante, du dispositif coupleur (60), déterminée par l'au moins un élément de couplage (61), agissant entre le tube de mesure (10) et l'élément support (20), est supérieure à 0,5 fois, notamment dans la plage de 0,7 à 1,3 fois, un rapport, $Q_{10}/x_0$, qui représente une force transversale, $Q_{10}$, se rapportant à une déviation latérale, $X_{10}$, d'un point d'attaque, initiée globalement par le tube de mesure (10) vibrant côté entrée et côté sortie dans l'élément support (20) et/ou dans la conduite raccordée, point d'attaque au niveau duquel le dispositif coupleur (60) agit sur le tube de mesure (10), de telle sorte que la rigidité élastique du dispositif coupleur (60) est réglée à au moins 10 fois, notamment à au moins 20 fois, par rapport à une

rigidité élastique, $c_{10}$, agissant dans la direction d'action de la force transversale, $Q_{10}$, du tube de mesure (10).

2. Transducteur du type à vibrations destiné à un fluide s'écoulant dans une conduite, lequel transducteur comprend :

- un tube de mesure (10) vibrant au moins temporairement en fonctionnement, placé dans le cours de la conduite et est destiné à guider le fluide
- un premier élément support (20) fixé en une extrémité d'entrée et en une extrémité de sortie du tube de mesure (10),
- un circuit d'excitation électromécanique (40) destiné à générer une force d'excitation, $F_{exc}$, variable dans le temps, faisant entrer en vibration le tube de mesure (10),
- un circuit capteur (50) destiné à mesurer les vibrations du tube de mesure (10), ainsi que
- un dispositif coupleur (60) relié avec le tube de mesure (10) et l'élément support (20), lequel dispositif coupleur comprend au moins un élément de couplage (61) interagissant mécaniquement, notamment de façon élastique, avec le tube de mesure (10) vibrant et l'élément support (20),
- pour lequel le tube de mesure (10) est excité au moins temporairement, en fonctionnement, en un mode de vibration au moyen du circuit d'excitation (40), mode dans lequel il exécute au moins partiellement des vibrations de flexion autour d'un axe de vibration reliant de façon imaginaire l'extrémité d'entrée et l'extrémité de sortie du tube de mesure (10), de telle manière qu'il adopte pour l'essentiel une forme de vibration avec au moins trois ventres de vibration de flexion,
- pour lequel l'au moins un élément de couplage (61) du dispositif coupleur (60) est couplé mécaniquement avec le tube de mesure (10) et l'élément support (20) de telle sorte à agir sur le tube de mesure (10) dans une zone, notamment centrale, de l'un des au moins trois ventres de vibration,
- pour lequel le tube de mesure (10) est pour l'essentiel coudé, notamment pour l'essentiel coudé en forme de S, et
- pour lequel une rigidité élastique, $c_{60}$, notamment pour l'essentiel constante, du dispositif coupleur (60), déterminée par l'au moins un élément de couplage (61), agissant entre le tube de mesure (10) et l'élément support (20), est supérieure à 0,5 fois, notamment dans la plage de 0,7 à 1,3 fois, un rapport, $Q_{10}/x_0$, qui représente une force transversale, $Q_{10}$, se rapportant à une déviation latérale, $X_{10}$, d'un point d'attaque, initiée globalement par le tube de mesure (10) vibrant côté entrée et côté sortie dans l'élément support (20) et/ou dans la conduite raccordée, point d'attaque au niveau duquel le dispositif coupleur (60) agit sur le tube de mesure (10), de telle sorte que la rigidité élastique du dispositif coupleur (60) est réglée à au moins 0,8 fois par rapport à une rigidité élastique, $c_{10}$, agissant dans la direction d'action de la force transversale, $Q_{10}$, du tube de mesure (10).

3. Transducteur selon la revendication 1 ou 2,

- pour lequel le tube de mesure (10) est excité, en fonctionnement, au moyen d'un circuit d'excitation (40), au moins temporairement en un mode de vibration dans lequel il exécute au moins partiellement des vibrations torsionnelles autour de l'axe de vibration, ce même axe reliant pour l'essentiel de façon imaginaire l'extrémité d'entrée et l'extrémité de sortie du tube de mesure (10), et
- pour lequel les éléments de couplage (61, 62) sont exécutés en tant que ressorts à lames, qui sont reliés à travers un levier (41 c) avec le tube de mesure (10).

4. Transducteur selon l'une des revendications précédentes, pour lequel l'au moins un élément de couplage est soumis, en fonctionnement, de façon répétée à des déformations élastiques, en raison de mouvements relatifs du tube de mesure (10) vibrant et de l'élément support (20).

5. Transducteur selon la revendication précédente, pour lequel l'au moins un élément de couplage (61) relie de façon élastique entre eux le tube de mesure (10) et l'élément support (20).

6. Transducteur selon l'une des revendications précédentes, pour lequel le tube de mesure (10), notamment sa forme de vibration dans le mode de vibration excité, est pour l'essentiel symétrique, notamment en symétrie de révolution, par rapport à un axe de référence imaginaire situé dans la direction d'action de la force d'excitation, $F_{exc}$.

7. Transducteur selon l'une des revendications précédentes, pour lequel le premier élément support (20) présente une rigidité élastique, $c_{20}$, agissant également dans la direction d'action de la force transversale, $Q_{10}$, laquelle rigidité est différente de la rigidité élastique, $c_{10}$, du tube de mesure (10).

8. Transducteur selon la revendication précédente, pour lequel la rigidité élastique, $c_{10}$, du tube de mesure (10) est choisie inférieure à la rigidité élastique, $c_{20}$, du premier élément support (20).

**9.** Transducteur selon l'une des revendications précédentes, pour lequel une masse totale du tube de mesure (10), avec le fluide qu'il contient, est choisie inférieure à une masse du premier élément support.

**10.** Transducteur selon l'une des revendications précédentes, pour lequel le mode de vibration excité correspond pour l'essentiel à un mode propre naturel du tube de mesure (10) avec le dispositif coupleur (60) agissant sur ce mode.

**11.** Transducteur selon la revendication précédente, pour lequel le tube de mesure (10) vibrant adopte pour l'essentiel une forme de vibration avec exactement trois ventres de vibration de flexion.

**12.** Transducteur selon l'une des revendications précédentes, pour lequel la fréquence des vibrations de flexion du tube de mesure (10), en fonctionnement, est toujours maintenue plus basse qu'une fréquence de résonance mécanique inférieure de l'élément support (20).

**13.** Transducteur selon l'une des revendications précédentes, pour lequel le premier élément support (20) s'étend au moins partiellement le long du tube de mesure (10).

**14.** Transducteur selon la revendication précédente, pour lequel le tube de mesure (10) est entouré au moins partiellement par le premier élément support (20) qui est pour l'essentiel de forme tubulaire.

**15.** Transducteur selon la revendication précédente, pour lequel le tube de mesure (10) et le premier élément support (20) sont alignés entre eux pour l'essentiel de façon coaxiale.

**16.** Transducteur selon l'une des revendications précédentes, pour lequel le tube de mesure (10) communique avec la conduite par l'intermédiaire d'un premier élément de tube de liaison (11) débouchant dans l'extrémité d'entrée et par l'intermédiaire d'un deuxième élément de tube de liaison (12) débouchant dans l'extrémité de sortie et notamment aligné par rapport au premier élément de tube de liaison (11) et/ou par rapport à l'axe de vibration.

**17.** Transducteur selon la revendication précédente, pour lequel le premier élément support (20) est conçu en tant que contre-vibrateur (20) fixé côté entrée et côté sortie au tube de mesure (10), et pour lequel le tube de mesure et le premier élément support (20) sont suspendus de façon apte à vibrer dans un deuxième élément support (100) conçu notamment en tant que boîtier de transmetteur, par l'intermédiaire du premier et du deuxième élément de tube de liaison (11, 12).

14

200

100

13

*Fig. 1*

**Abb. 1**

Fig. 2a

Fig. 2b

**Abb. 2**

Fig. 3

Fig. 5

Abb. 3

Fig. 4b

Fig. 4a

**Abb. 4**

Fig. 6

Fig. 7

**Abb. 5**

Abb. 6

Fig. 9

Fig. 10

**Abb. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3916285 A
- EP 317340 A
- EP 518124 A
- EP 1207375 A
- US 4823614 A
- US 5291792 A
- US 5398554 A
- US 5476013 A
- US 5531126 A
- US 5691485 A
- US 5705754 A
- US 5796012 A
- US 5945609 A
- US 5979246 A
- US 6006609 A
- US 6223605 B
- US 6484591 B
- US 6840109 B
- WO 9951946 A
- WO 9940394 A
- WO 0014485 A
- US 5969265 A
- US 5287754 A
- US 5796010 A
- US 6223605 A
- US 4524610 A
- WO 030959950 A